# FASCICULE DE BREVET EUROPEEN

(11) **EP 0 589 116 B1**
(45) Date de publication et mention de la délivrance du brevet: **26.02.1997**
(21) Numéro de dépôt: 92440133.4
(22) Date de dépôt: 30.11.1992
(51) Int. Cl.: B29C 45/14, B29C 43/18

(54) **Procédé de fabrication d'un objet multicouche par moulage, objet obtenu et application à la fabrication de tableaux de bord et/ou d'éléments d'habillage d'une carrosserie de véhicule**
Verfahren zum Herstellen eines mehrschichtigen Gegenstandes durch Formen, so hergestellter Gegenstand und Verwendung zur Herstellung von Armaturenbrettern und/oder Verkleidungselementen einer Fahrzeugkarosserie
Method for manufacturing a multilayered object by moulding, object so obtained and application to the manufacture of dashboards and/or upholstery elements of a vehicle body

(30) Priorité: 22.09.1992 FR 9211557
(43) Date de publication de la demande: 30.03.1994
(73) Titulaire: REYDEL Société Anonyme, F-59147 Gondecourt (FR)
(72) Inventeur: D'Hooren, Jean-Jacques, F-59147 Gondecourt (FR)
(74) Mandataire: Duthoit, Michel

(56) Documents cités:
- EP-A- 0 249 363
- EP-A- 0 500 033
- DE-C- 972 945
- PATENT ABSTRACTS OF JAPAN vol. 12, no. 157 (M-696)(3004) 13 Mai 1988 & JP-A-62 275 726 (HITACHI CHEM.CO.LTD
- PATENT ABSTRACTS OF JAPAN vol. 12, no. 21 (M-661)(2868) 22 Janvier 1988 & JP-A-62 179 911 (DAINIPPON PRINTING CO. LTD)

## Description

L'invention est relative à un procédé de fabrication de fabrication d'un objet multicouche par moulage, et à un objet ainsi obtenu ainsi qu'une application du procédé à la fabrication de tableaux de bord et/ou d'éléments d'habillage d'une carrosserie de véhicule.

Bien qu'ayant été développée plus spécialement pour réaliser des pièces dans le domaine automobile, il est néanmoins à noter que la présente invention pourra s'appliquer à tout domaine dans lequel on utilise des objets aux formes diverses obtenus par moulage de matière thermoplastique.

On connaît divers procédés de moulage par coulée, par revêtement des parois d'un moule, par thermoformage, par soufflage ou encore par injection ou par compression.

Dans le cas d'objets de formes et présentant des déformations importantes, on utilise également la combinaison de différents procédés et notamment la technique de moulage par injection-compression.

On connaît notamment du document US-4.873.045, un procédé selon lequel, dans un moule de forme complémentaire, on maintient une feuille de matière thermoplastique, ou textile, également appelée 〈〈 peau 〉〉, qui constituera la face externe de l'objet. Ensuite, dans le moule entr'ouvert, on prévoit, sous ladite peau, de la résine thermoplastique, pour constituer la couche interne de l'objet, couche qui va donner du volume et de la tenue à l'objet ainsi qu'une certaine résistance.

Compte tenu de la déformabilité de la peau externe, celle-ci arrive à épouser les différentes formes du moule, et on détermine son épaisseur afin de favoriser celle-ci.

Cependant, ce procédé connaît ses limites lorsqu'il s'agit de former un objet dont la face externe porte des déformations importantes qui engendrent des allongement importants des matériaux de départ pour arriver aux formes voulues, et il n'est pas rare de constater des craquelures de la peau qui laissent apparaître la couche interne.

C'est par exemple le cas lorsqu'à partir de feuilles planes, on réalise des panneaux de garniture de portières avec des formes en creux et en bosses importantes telles que réserves pour plaques décoratives, accoudoirs intégrés....

De tels procédés sont également inapplicables lorsqu'il s'agit d'utiliser une peau externe présentant un aspect grainé et/ou des motifs en relief. En effet, si la pièce présente des déformations importantes, qu'elles soient vives ou non, il est habituel d'écraser, au niveau de celles-ci, le grain ou les motifs, ce qui est préjudiciable à l'esthétique de l'objet obtenu.

Le but de la présente invention est de proposer un procédé de fabrication d'un objet multicouche par moulage, ce dernier présentant une face externe portant une ou plusieurs déformations en creux et/ou en bosses plus ou moins importantes qui autorise la technique de moulage par injection-compression, sans que cela ne soit préjudiciable pour la qualité esthétique du produit.

En particulier, le procédé de la présente invention permet de pallier les inconvénients précités et autorise une qualité esthétique irréprochable de la face externe de l'objet, c'est-à-dire sans faire apparaître de craquelures et/ou sans écraser les motifs de la face externe ou son aspect grené.

Un autre but de la présente invention est de proposer un objet multicouche moulé par injection-compression, dont une des applications avantageuses concerne le domaine des véhicules et plus précisément la fabrication de tableaux de bord et/ou d'éléments d'habillage de carrosserie.

Un autre but de la présente invention est de proposer un procédé de fabrication d'un objet multicouche, dont la face externe pourra se présenter sous la forme d'une peau de faible épaisseur réalisée par exemple dans un matériau noble et plus coûteux, le volume et la tenue de l'objet étant conférés par une couche interne, utilisée comme matériau de remplissage, et moins coûteux.

D'autres buts et avantages de la présente invention apparaîtront au cours de la description qui va suivre, qui n'est cependant donnée qu'à titre indicatif et qui n'a pas pour but de la limiter.

Selon l'invention, le procédé de fabrication d'un objet multicouche par moulage, le dit objet présentant une face externe portant une ou plusieurs déformations en creux et/ou en bosses plus ou moins importantes, procédé par lequel, dans un moule, on maintient une feuille de matière thermo-plastique, ou textile constituant la dite face externe, et on injecte sous la dite feuille de la résine thermo-plastique, puis on forme le dit objet par une étape de compression, est caractérisé par le fait qu'au niveau d'une ou plusieurs zones prédéterminées, localisées en fonction des déformations souhaitées :
- on interpose un écran, entre la dite feuille constituant la dite face externe et la dite résine thermoplastique, de perméabilité prédéterminée en fonction de la résine et de la dite compression, et,
- on prévoit au moins une incision, à ce niveau, de la dite feuille constituant la dite face externe.

L'objet multicouche moulé par injection-compression, notamment obtenu par la mise en oeuvre du procédé de la présente invention, constitué d'une feuille de matière thermo-plastique, ou textile, formant la dite face externe, et d'une couche interne, à base de résine thermo-plastique, est caractérisé par le fait qu'il comporte un écran, prévu entre les dites feuille et couche de résine, dont la perméabilité est fonction de la résine, au niveau d'une ou plusieurs zones prédéterminées, localisées en fonction des déformations souhaitées, et comporte au moins une entaille de la feuille constituant la dite face externe à ce niveau.

Comme nous l'avons évoqué ci-dessus, la présente invention trouve une application particulière, mais non exclusive, à la fabrication de tableaux de bord et/ou d'éléments d'habillage de carrosserie de véhicule.

La présente invention sera mieux comprise à la lecture de la description suivante accompagnée des dessins en annexe qui en font partie intégrante.

Les figures 1a, b, et c montrent schématiquement les différentes étapes du procédé de fabrication d'un objet multicouche par moulage selon l'invention.

La figure 2 montre une vue en coupe partielle d'un mode de réalisation d'un objet selon l'invention illustrant le détail de sa structure.

La figure 3 montre une vue de dessous partielle de l'objet illustré à la figure 2.

L'invention vise un procédé de fabrication d'un objet multicouche par moulage, le dit objet présentant une face externe portant une ou plusieurs déformations en creux et/ou en bosses plus ou moins importantes, ainsi que l'objet obtenu.

Bien que plus spécialement développée dans le cadre de l'industrie automobile, la présente invention s'appliquera à tout type d'objet réalisé par moulage de matière plastique.

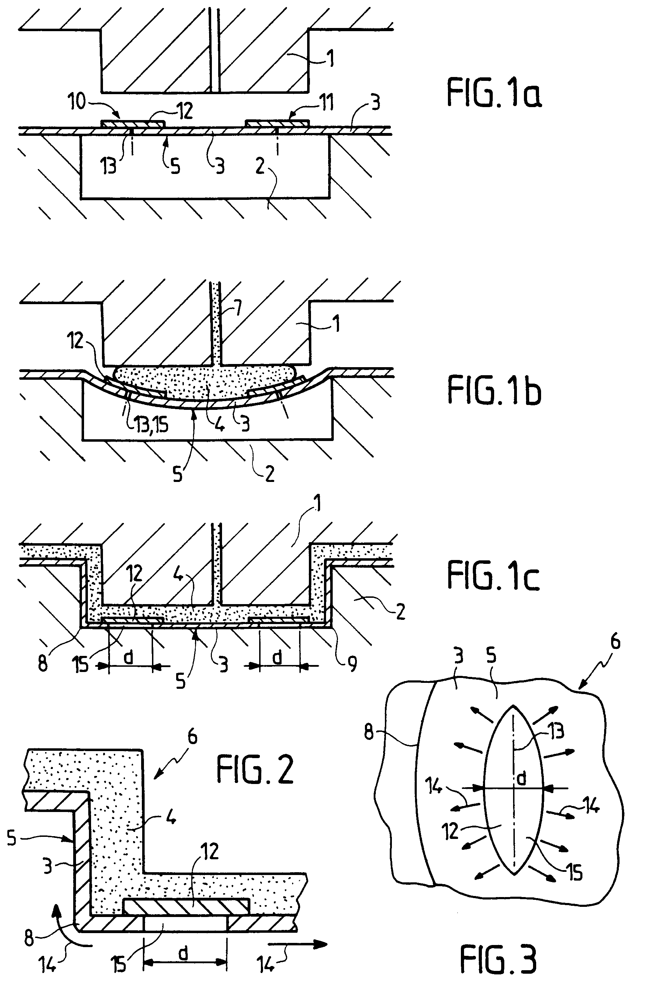

Les figures 1a, b et c montrent schématiquement le principe du procédé de moulage de la présente invention mettant en oeuvre un moule qui, en fonction des formes de l'objet, présente généralement une partie mâle 1 et une partie femelle 2.

Le procédé reprend la technique connue sous le nom de "injection-compression" qui met en oeuvre d'une part une feuille de matière thermo-plastique 3, ou textile, et d'autre part de la résine thermo-plastique 4.

Plus précisément, comme le montre la figure 1a, on maintient dans le moule 1, la feuille préalablement plane 3, qui constituera la face externe 5 de l'objet final.

La figure 1b montre l'étape d'injection de la résine thermo-plastique 4 sous la dite feuille 3, c'est-à-dire côté opposé à la face externe 5.

La figure 1c montre l'étape de compression pendant laquelle on forme le dit objet, désigné sous le repère 6, et montré partiellement à titre d'exemple à la figure 2.

Il est à noter que dans ces deux étapes, d'injection et de compression, on met en oeuvre les techniques connues de l'homme du métier. Particulièrement, l'injection est autorisée par un canal 7 prévu dans la partie mâle 1 du moule adaptée à cet effet, le moule étant entr'ouvert, et l'étape de compression consiste en un rapprochement de la partie mâle 1 et de la partie femelle 2 du moule pour comprimer entre ses faces la résine 4 et l'appliquer sur la peau externe 3.

Comme nous l'avons évoqué au début de la présente demande, lorsque l'objet 6 présente, de par sa destination et/ou son utilisation, une ou plusieurs déformations en creux et/ou en bosses plus ou moins importantes 8, 9, au moment de la compression, la peau externe 3 est étirée, ce qui provoque bien souvent des déchirures, ou des écrasements de la feuille externe, conférant un aspect inesthétique au produit obtenu.

Les phénomènes sont essentiellement fonction de l'épaisseur de la peau externe 3, de son taux d'allongement autorisé et de l'amplitude des déformations. Par exemple, pour un taux d'allongement possible faible de l'ordre de 20%, toutes déformations de l'ordre de 10% seraient considérées comme importantes. En revanche, pour un matériau supportant des déformations allant jusque 200%, les déformations dues au thermoformage seraient considérées comme importantes si elles atteignent 100 à 150 %.

Pour pallier cet inconvénient, selon la présente invention, au niveau d'une ou plusieurs zones prédéterminées 10, 11, localisées en fonction des déformations souhaitées 8, 9 de l'objet, on interpose un écran 12, entre la feuille 3 de matière thermo-plastique ou textile et la couche de résine 4, et on prévoit au moins une incision 13, à ce niveau, de la feuille 3.

Grâce à ces dispositions, au moment de l'étape de compression, on va "donner du mou" à la feuille 3 pour qu'elle puisse se déformer, selon le moule 1 et 2, sans pour autant que ce soit préjudiciable pour son épaisseur, ni pour son aspect, c'est-à-dire afin de diminuer les tensions de la feuille dans les zones visibles.

Autrement dit, comme le montrent particulièrement les flèches 14 des figures 2 et 3, la matière de la feuille 3 va se déplacer radialement par rapport à l'incision 13 pour constituer une entaille 15.

Cette entaille 15, dont la largeur est repérée par "d" sur les figures, est engendrée par le déplacement de la matière ce qui permet d'éviter d'étirer le film ou de le comprimer trop fortement pour épouser les formes, notamment au niveau des déformations souhaitées de l'objet.

Dans ces conditions, les déformations 8, 9 ne sont pas marquées après moulage, et si la face externe 5 de la feuille 3 présentait des reliefs ou un aspect grainé, celui-ci est maintenu dans son intégralité, ce qui ne provoque pas un aspect disgracieux de la face visible de l'objet au niveau des arêtes. Cela permet également d'éviter qu'il y ait des déchirures à ce niveau.

Dans de nombreux cas, on prévoira la présence de l'écran 12 et de la ou des incisions 13 dans des zones de la face externe 5 cachées lors de l'utilisation du dit objet 6.

Cependant, il pourrait être envisagé d'utiliser un écran coloré et des formes d'entailles 15 particulières afin de donner à l'objet un aspect esthétique.

En ce qui concerne l'écran 12, on le choisira avec une perméabilité prédéterminée en fonction de la résine thermo-plastique et de la force de compression au cours de l'étape de compression.

Plus précisément, cette perméabilité résulte d'un compromis entre un bon accrochage de la résine 4 et de l'écran 12, pour éviter le cloquage, et la constitution d'une barrière, pour éviter que la résine ne traverse l'entaille 15 lors de la compression.

A titre d'exemple, en utilisant des résines thermo-plastiques classiques telles que polyéthylèe, polypropylène, ou ABS, on a obtenu de bons résultats en prévoyant un écran 12 se présentant sous la forme d'un non-tissé de fibres synthétiques, telles que notamment polyester, polyamide ou verre, d'une densité comprise entre 30 et 150 g/m².

Sur les figures, le dit écran 12, dans les zones prédéterminées 10, 11, se présente sous la forme de pièces. Toutefois, il pourrait être envisagé d'utiliser une nappe de non-tissé continue constituant alors un écran continu, interposée entre la feuille externe 3 et la couche interne de résine 4.

Par ailleurs, pour augmenter l'aspect esthétique du produit obtenu, selon la présente invention, la dite feuille 3 de matière thermo-plastique ou textile peut présenter, côté extérieur 5, un aspect grainé et/ou des motifs en relief.

On utilise à ce sujet par exemple une feuille 4 se présentant sous la forme d'un film de polychlorure de vinyle (PVC) préalablement grainé ou portant des motifs tels que fausse piqûre sellier, etc.

Cela étant, comme le montre la figure 2, l'objet 6 multicouche obtenu par moulage, par injection compression, dont la face externe 5 porte une ou plusieurs déformations en creux et/ou en bosses 8, 9, est constitué d'une peau externe 3, notamment en PVC, d'une couche interne de résine 4 thermo-plastique, polymérisée selon des techniques connues de l'homme du métier, entre lesquelles est prévu un écran 12, au niveau d'une ou plusieurs zones prédéterminées 10, 11, localisées en fonction des déformations souhaitées, la feuille thermo-plastique 3 comportant au moins une entaille 15 à ce niveau.

La fabrication de tableaux de bord et/ou d'éléments d'habillage de carrosserie de véhicule bénéficiera avantageusement de la présente invention car dans ces domaines, on retrouve les contraintes et dispositions décrites ci-dessus.

Naturellement, d'autres mises en oeuvre de la présente invention, a la portée de l'homme de l'art, auraient pu être envisagées, sans pour autant sortir du cadre de la présente demande.

## Revendications

1. Procédé de fabrication d'un objet multicouche par moulage, le dit objet (6) présentant une face externe (5) portant une ou plusieurs déformations en creux et/ou en bosses plus ou moins importantes (8, 9) vives saillantes, procédé par lequel, dans un moule (1), on maintient une feuille (3) de matière thermo-plastique ou textile, constituant la dite face externe (5), et on injecte, sous la dite feuille (3), de la résine thermo-plastique (4), puis on forme le dit objet (6) par une étape de compression, caractérisé par le fait qu'au niveau d'une ou plusieurs zones (10, 11) prédéterminées, localisées en fonction des déformations (8, 9) souhaitées :
- on interpose un écran (12), entre les dites feuille (3) et résine (4), de perméabilité prédéterminée en fonction de la résine thermo-plastique et de la dite compression,
- et on prévoit au moins une incision (13), à ce niveau, de la dite feuille (3) constituant la dite face externe (5).

2. Procédé selon la revendication 1, caractérisé par le fait que l'on prévoit la présence des dits écran (12) et incision (13) dans des zones de la face externe (5) cachée lors de l'utilisation du dit objet (6).

3. Procédé selon la revendication 1, caractérisé par le fait que le dit écran (12) se présente sous la forme de pièces ou d'une nappe de non-tissé.

4. Procédé selon la revendication 3, caractérisé par le fait que le dit écran (12) se présente sous la forme d'un non-tissé de fibres synthétiques d'une densité comprise entre 30 et 150 g/m².

5. Procédé selon la revendication 1, caractérisé par le fait que la dite feuille de matière thermo-plastique ou textile présente, côté extérieur, un aspect grené et/ou des motifs en relief.

6. Procédé selon la revendication 1, caractérisé par le fait que la dite feuille se présente sous la forme d'un film de polychlorure de vinyle (PVC).

7. Objet multicouche moulé par injection-compression, obtenu notamment par la mise en oeuvre du procédé de la revendication 1, présentant une face externe portant une ou plusieurs déformations en creux et/ou en bosses plus ou moins importantes, constitué d'une feuille de matière thermo-plastique, formant la dite face externe, et d'une couche interne, à base de résine thermo-plastique, caractérisé par le fait qu'il comporte un écran (12), prévu entre les dites feuille (3) et couche de résine (4), dont la perméabilité est fonction de la dite résine, au niveau d'une ou plusieurs zones (10, 11) prédéterminées, localisées en fonction des déformations souhaitées (8, 9), et comporte au moins une entaille (15) de la dite feuille (3) à ce niveau.

8. Objet selon la revendication 7, caractérisé par le fait qu'il se présente sous la forme de :
- une peau externe (3) en PVC,
- une nappe de non-tissé (12) d'une densité comprise entre 30 et 150 g/m²,
- une couche de résine (4) thermo-plastique polymérisée.

9. Application du procédé selon la revendication 1 à la fabrication de tableaux de bord et/ou d'éléments d'habillage d'une carrosserie de véhicule.

## Claims

1. Process for manufacturing a multilayer object by moulding, the said object (6) having an outer face (5) bearing one or more sharp, projecting inwardly and/or outwardly facing deformed portions of varying sizes (8, 9), a process whereby, in a mould (1), a sheet (3) of thermoplastic or textile material, constituting the said outer face (5), is held, thermoplastic resin (4) is injected beneath the said sheet (3), and then the said object (6) is formed by a compression step, characterized by the fact that, at one or more predetermined areas (10, 11), located as a function of the desired deformations (8, 9):
- between the said sheet (3) and resin (4) is interposed a screen (12) the permeability of which is predetermined as a function of the thermoplastic resin and of the said compression;
- at least one incision (13) is provided, in this area, in the said sheet (3) forming the said outer face (5).

2. Process according to claim 1, characterized by the fact that the presence of the said screen (12) and incision (13) is provided for in areas of the outer face (5) that are concealed when the said object (6) is in use.

3. Process according to claim 1, characterized by the fact that the said screen (12) takes the form of pieces or of a sheet of non-woven fabric.

4. Process according to claim 3, characterized by the fact that the said screen (12) takes the form of a non-woven fabric of synthetic fibres having a density of between 30 and 150 g/m².

5. Process according to claim 1, characterized by the fact that the said sheet of thermoplastic or textile material has, on the outer side, a grained aspect and/or patterns in relief.

6. Process according to claim 1, characterized by the fact that the said sheet takes the form of a polyvinyl chloride (PVC) film.

7. Multilayer object moulded by injection-compression, obtained, in particular, through implementation of the process according to claim 1, having an outer face bearing one or more inwardly and/or outwardly facing deformed portions of varying sizes, constituted by a sheet of thermoplastic material, forming the said outer face, and by a thermoplastic resin based inner layer, characterized by the fact that it comprises a screen (12), provided between the said sheet (3) and resin layer (4), the permeability of which is a function of the said resin, at one or more predetermined areas (10, 11) located as a function of the desired deformed portions (8, 9), and comprises at least one cut-out portion (15) in the said sheet (3) in this area.

8. Object according to claim 7, characterized by the fact that it takes the form of:
- an outer skin (3) made of PVC;
- a sheet of non-woven fabric (12) with a density of between 30 and 150 g/m²;
- a layer of polymerized thermoplastic resin (4).

9. Application of the process according to claim 1 to the manufacture of dashboards and/or items of trim for a vehicle body.

## Patentansprüche

1. Verfahren zum Herstellen durch Formung eines mehrschichtigen Gegenstands, wobei dieser Gegenstand (6) eine Außenfläche (5) aufweist, die eine oder mehrere mehr oder weniger große, vorstehende, scharfe, vertiefungs- oder erhöhungsförmige Verformungen (8, 9) trägt, bei welchem Verfahren eine die genannte Außenfläche (5) bildende Kunststoff- oder Textilfolie (3) in einer Form (1) gehalten und unterhalb der genannten Folie (3) thermoplastisches Harz (4) eingespritzt, anschließend der gennante Gegenstand (6) durch eine Zusammenpressungsstufe gebildet wird, dadurch gekennzeichnet, daß im Bereich eines oder mehrerer vorbestimmten, je nach den gewünschten Verformungen (8, 9) lokalisierten Bereiche (10, 11):
- zwischen die genannte Folie (3) und das genannte Harz (4) eine Abschirmfolie (12) mit einer in Abhängigkeit von dem genannten thermoplastischen Harz und der genannten Zusammenpressung vorbestimmten Durchlässigkeit zwischengefügt wird, und
- in diesem Bereich wenigstens einen Einschnitt (13) der genannten, die genannte Außenfläche (5) bildende Folie (3) vorgesehen wird.

2. Verfahren nach Anspruch 1, dadurch gekennzeichnet, daß die Anwesenheit der genannten Abschirmfolie (12) und des genannten Einschnitts (13) in Bereichen der während der Verwendung des genannten Gegenstands (6) unsichtbaren Außenfläche (5) vorgesehen wird.

3. Verfahren nach Anspruch 1, dadurch gekennzeichnet, daß die genannte Abschirmfolie (12) als nichtgewebte Teile oder ein nichtgewebtes Tuch ausgestaltet ist.

4. Verfahren nach Anspruch 3, dadurch gekennzeichnet, daß die genannte Abschirmfolie (12) als ein nichtgewebtes Tuch aus Kunstfasern mit einer Dichte zwischen 30 und 150 g/m² ausgestaltet ist.

5. Verfahren nach Anspruch 1, dadurch gekennzeichnet, daß die genannte thermoplastische oder Textilfolie an der Außenseite ein genarbtes Aussehen und/oder plastisch hervortretende Muster aufweist.

6. Verfahren nach Anspruch 1, dadurch gekennzeichnet, daß die genannte Folie als eine Vinylpolychloridfolie (PVC) ausgestaltet ist.

7. Durch Einspritzung-Zusammenpressung geformter, mehrschichtiger Gegenstand, der nämlich durch Anwendung des Verfahrens nach Anspruch 1 erhalten wird und eine Außenfläche aufweist, die eine oder mehrere mehr oder weniger große, vertiefungs- oder erhöhungsförmige Verformungen trägt, bestehende aus einer die genannte Außenfläche bildende thermoplastischen Folie und einer Innenschicht mit thermoplastischem Harzgehalt, dadurch gekennzeichnet, daß er eine im Bereich eines oder mehrerer vorbestimmten, je nach der gewünschten Verformungen (8, 9) lokalisierten Bereiche (10, 11), zwischen der genannten Folie (3) und der genannten Harzschicht (4) vorgesehene Abschirmfolie (12) umfaßt, deren Durchlässigkeit von dem genannten Harz und der genannten Zusammenpressung abhängig ist, und er in diesem Bereich wenigstens einen Einschnitt (15) der genannten Folie (3) umfaßt.

8. Gegenstand nach Anspruch 7, dadurch gekennzeichnet, daß er als:
- eine Außenhaut (3) aus PVC,
- ein nichtgewebtes Tuch (12) mit einer Dichte zwischen 30 und 150 g/m²,
- eine polymerisierte, thermoplastische Harzschicht (4), ausgestaltet ist.

9. Anwendung des Verfahrens nach Anspruch 1 für die Herstellung von Instrumentenbrettern und/oder Verkleidungsteilen einer Fahrzeugkarosserie.
